# EUROPÄISCHE PATENTSCHRIFT

(11) **EP 3 230 205 B1**
(45) Veröffentlichungstag und Bekanntmachung des Hinweises auf die Patenterteilung: **20.05.2020**
(21) Anmeldenummer: 15790995.3
(22) Anmeldetag: 09.11.2015
(51) Int. Cl.: C01B 32/956, H01M 4/587, C04B 35/622, C04B 35/624, C04B 35/636, H01M 4/36, H01M 4/38, H01M 4/62, H01M 10/052

(54) **VERFAHREN ZUM HERSTELLEN EINES ELEKTRODENMATERIALS FÜR EINE BATTERIEELEKTRODE**
METHOD FOR PRODUCING AN ELECTRODE MATERIAL FOR A BATTERY ELECTRODE
PROCÉDÉ POUR LA FABRICATION D'UN MATÉRIAU D'ÉLECTRODE POUR UNE ÉLECTRODE DE BATTERIE

(30) Priorität: 18.11.2014 DE 102014116868
(43) Veröffentlichungstag der Anmeldung: 18.10.2017
(73) Patentinhaber: Universität Paderborn, 33098 Paderborn (DE)
(72) Erfinder: GREULICH-WEBER, Siegmund, 33175 Bad Lippspringe (DE)
(74) Vertreter: Michalski Hüttermann & Partner Patentanwälte mbB
(86) Internationale Anmeldenummer: PCT/EP2015/076088
(87) Internationale Veröffentlichungsnummer: WO 2016/078955

(56) Entgegenhaltungen:
- BETTINA FRIEDEL ET AL: "Wide Bandgap Semiconductors - Nanowires of p- and n-type Silicon Carbide", MRS PROCEEDINGS, Bd. 963, 1. Januar 2007 (2007-01-01), XP055241780, DOI: 10.1557/PROC-0963-Q15-10
- B. FRIEDEL ET AL: "Sol-Gel Silicon Carbide for Photonic Applications", MATERIALS SCIENCE FORUM, Bd. 527-529, 15. Oktober 2006 (2006-10-15) , Seiten 759-762, XP055241807, DOI: 10.4028/www.scientific.net/MSF.527-529.759
- T. SRI DEVI KUMARI ET AL: "Nano silicon carbide: a new lithium-insertion anode material on the horizon", RSC ADVANCES: AN INTERNATIONAL JOURNAL TO FURTHER THE CHEMICAL SCIENCES, Bd. 3, Nr. 35, 25. Juni 2013 (2013-06-25), Seite 15028, XP055241823, GB ISSN: 2046-2069, DOI: 10.1039/c3ra40798e in der Anmeldung erwähnt
- ALBERT L. LIPSON ET AL: "Enhanced Lithiation of Doped 6H Silicon Carbide (0001) via High Temperature Vacuum Growth of Epitaxial Graphene", JOURNAL OF PHYSICAL CHEMISTRY C, Bd. 116, Nr. 39, 4. Oktober 2012 (2012-10-04), Seiten 20949-20957, XP055241817, ISSN: 1932-7447, DOI: 10.1021/jp307220y in der Anmeldung erwähnt

## Beschreibung

Die vorliegende Erfindung betrifft ein Verfahren zum Herstellen eines Elektrodenmaterials für eine Batterieelektrode sowie eine Elektrode für eine Batterie, wie insbesondere eine Anode für eine Lithium-Ionen-Batterie.

Elektromobilität und regenerative Energieerzeugung erfordern oftmals besonders effiziente Hochleistungsenergiespeicherung, wobei insbesondere Lithium-Ionen-Batterien einen erfolgversprechenden Ansatz bieten aufgrund ihrer vergleichsweise hohen Energiedichte. Lithium-Ionen-Batterien werden deshalb vielfach angewendet und finden beispielsweise Anwendung in der Unterhaltungselektronik, in tragbaren Computern wie auch in elektrisch angetriebenen Fahrzeugen.

Aus dem Dokument Nano-porous Si/C composites for anode material of lithium-ion batteries", Zheng et. al. Electrochimica Acta 52 (2007) 5863 - 5867, ist es beispielsweise bekannt, Elektroden für Lithium-Ionen-Batterien aus Kompositmaterialien zu fertigen, die elementares Silizium und Kohlenstoff aufweisen.

Das Dokument JP 2008066128 beschreibt ein Verfahren zum Herstellen einer Elektrode für eine Lithium-Ionen-Batterie, bei dem ausgehend von einem Polysilan und einer Kohlenstoffquelle ein Kompositmaterial erzeugt wird, das Siliziumcarbid auf einem Kohlenstoffmaterial aufweist.

Das Dokument US 8,734,674 B1 beschreibt ein Verfahren durch welches die Lithium-Ionen-Kapazität von Siliziumcarbid verbessert werden soll. Um dies zu erreichen lehrt dieses Dokument, eine Graphitiserung von dotiertem Siliziumcarbid in einer inerten Atmosphäre durch eine definierte Temperaturbehandlung durchzuführen, wobei ferner an der Oberfläche anhaftendes Oxid entfernt werden soll.

Das Dokument Nano Silicon carbide: a new lithium-insertion anode material on the horizon" T. Sri Devi Kumari et. al: RCD Adv., 2013, 3, 15028 - 15034 beschreibt ferner, Siliziumcarbid als Material für Anoden für Lithium-Ionen-Batterien einzusetzen. Dabei wird es im Detail beschrieben, dass 3C Silizium durch chemische Gasphasenabscheidung erzeugt wird, wobei Silizium-Nanopartikel zusammen mit Methan zu Siliziumcarbid reagieren. Eine Dotierung des Siliziumcarbids erscheint jedoch schwer möglich.

Das Dokument Enhanced Lithiation of Doped 6H Silicon Carbide (0001) via High Temperature Vacuum Growth of Epitaxial Graphene" Lipson et al, J. Phys. Chem. C2012, 116, 20949 - 20957 beschreibt ferner eine Verbesserung der elektrochemischen Lithiierungskapazität von für Anoden verwendbares Siliziumcarbid durch Oberflächen-Graphitisierung durch einen Tempervorgang bei 1350°C.

B. Friedel et al., "Wide Bandgap Semiconductors - Nanowires of p- and n-type Silicon Carbide", beschreibt das Herstellen von monokristallinen Nanodrähten aus kubischem Siliciumcarbid, nämlich von 3C-SiC. Im Detail wird bezüglich der Herstellung offenbart, dass Tetraethoxysilan in Ethanol und Saccharose in Wasser gemischt und gerührt werden und hieraus ein Gel erzeugt wird, welches getrocknet wird. Zur Erzeugung von Siliziumcarbid wird anschließend eine Temperaturbehandlung bei hoher Temperatur durchgeführt. Dabei wird ferner offenbart, dass eine Abscheidung auf einem Substrat erfolgt, welches verglichen zu der heißesten Zone des Reaktors eine um 100K verringerte Temperatur aufweist. Ferner wird beschrieben, dass eine Dotierung des Siliziumcarbids stattfinden kann.

B. Friedel et al., "Sol-Gel Silicon Carbide for Photonic Applications", Materials Science Forum 527-529 (2006) 759-762, beschäftigt sich ebenfalls mit der Herstellung von Siliziumcarbid unter Verwendung eines Sol-Gel-Verfahrens mit anschließender Temperaturbehandlung. Bezüglich der verwendeten Temperatur für die Temperaturbehandlung wird ausgeführt, dass diese ausschlaggebend ist für das spezifische Siliziumcarbid, welches durch die Temperaturbehandlung erhalten wird. Im Detail ist offenbart, dass entsprechend der Temperaturbehandlung etwa makroporöses, amorphes oder kristallines Siliziumcarbid erhalten werden kann. Ferner kann die Art erhaltenen kristallinen Siliziumcarbids durch die Temperaturbehandlung gesteuert werden. Beispielsweise kann, um Nanodrähte zu erzeugen, eine Temperatur von 1600°C eingestellt werden.

A.L. Lipson et al., "Enhanced Lithiation of Doped 6H Silicon Carbide (0001) via High Temparature Vacuum Growth of Epitaxial Graphene", J. Phs. Chem. 116 (2012) 20949-20957, beschreibt die Verwendung von Siliziumcarbid als Elektrodenmaterial für Lithium-Ionen-Batterien. Es wird herkömmliches Siliziumcarbid verwendet, welches einer Temnperaturbehandlung von beispielsweise 1300 °C unterzogen wird. Dabei wird insbesondere 6H-SiC verwendet.

Es besteht jedoch noch weiterhin Verbesserungspotential bei der Herstellung von Elektroden, insbesondere Anoden, von Batterien, wie beispielsweise Lithium-Ionen-Batterien. Insbesondere besteht weiteres Verbesserungspotential hinsichtlich der Kapazität beziehungsweise Energiedichte und der Zyklenbeständigkeit von Elektroden beziehungsweise Batterien, wobei insbesondere eine kostengünstige Lösung von Vorteil ist.

Es ist daher die Aufgabe der vorliegenden Erfindung, eine Lösung zu schaffen, durch welche auf kostengünstige Weise eine Batterie geschaffen werden kann, die eine gute Kapazität und/oder eine gute Zyklenbeständigkeit aufweist.

Die Lösung der Aufgabe erfolgt erfindungsgemäß durch eine Verwendung mit den Merkmalen des Anspruchs 1. Die Lösung der Aufgabe erfolgt ferner durch eine Batterieelektrode mit den Merkmalen des Anspruchs 7 sowie durch eine Batterie mit den Merkmalen des Anspruchs 11. Bevorzugte Ausgestaltungen der Erfindung sind in den Unteransprüchen, in der Beschreibung und dem Beispiel offenbart, wobei weitere in den Unteransprüchen oder in der Beschreibung oder dem Beispiel beschriebene oder gezeigte Merkmale einzeln oder in einer beliebigen Kombination einen Gegenstand der Erfindung darstellen können, wenn sich aus dem Kontext nicht eindeutig das Gegenteil ergibt.

Es wird eine Verwendung eines Verfahrens zum Herstellen eines Elektrodenmaterials für eine Batterieelektrode, insbesondere für eine Lithium-Ionen-Batterie, vorgeschlagen, wobei das Elektrodenmaterial nanostrukturiertes Siliziumcarbid umfasst. Das Verfahren umfasst die Verfahrensschritte:
a) Bereitstellen eines Gemisches mit einer Siliziumquelle, einer Kohlenstoffquelle und einem Dotierstoff, wobei wenigstens die Siliziumquelle und die Kohlenstoffquelle gemeinsam in Partikeln eines Feststoffgranulats vorliegen;
b) Behandeln des in Verfahrensschritt a) bereitgestellten Gemisches mit einer Temperatur in einem Bereich von ≥ 1400°C bis ≤ 2000°C, insbesondere in einem Bereich von ≥ 1650°C bis ≤ 1850°C, wobei
   Verfahrensschritt b) in einem Reaktor abläuft, der eine Abscheideoberfläche aufweist, dessen Temperatur relativ zu wenigstens einer weiteren inneren Reaktoroberfläche reduziert ist.

Durch ein vorbeschriebenes Verfahren lässt sich ein Elektrodenmaterial für eine Batterie, wie insbesondere für eine Lithium-Ionen-Batterie, schaffen, welches auch dotiert einfach herstellbar ist und welches ferner eine hohe Zyklenbeständigkeit ermöglichen kann.

Das vorbeschriebene Verfahren dient somit dazu, ein Elektrodenmaterial für eine Elektrode herzustellen. Unter einem Elektrodenmaterial ist dabei in an sich bekannter Weise ein derartiges Material zu verstehen, welches, gegebenenfalls zusammen mit weiteren Materialien, mit einem Stromableiter in Kontakt bringbar ist und dadurch zusammen mit dem Stromableiter eine Elektrode ausbilden kann. Insbesondere kann durch das vorbeschriebene Verfahren eine Anode für eine Lithium-Ionen-Batterie ausgebildet werden.

Dabei kann das folgende Verfahren vollständig oder einzelne der Verfahrensschritte a) und/oder b) vorzugsweise unter Schutzgas, wie insbesondere Argon, ablaufen.

Hierzu umfasst das Verfahren zunächst gemäß Verfahrensschritt a) das Bereitstellen eines Gemisches mit einer Siliziumquelle, einer Kohlenstoffquelle und einem Dotierstoff, wobei wenigstens die Siliziumquelle und die Kohlenstoffquelle gemeinsam in Partikeln eines Feststoffgranulats vorliegen. Insbesondere kann es somit bevorzugt sein, dass jedes der Partikel des Feststoffgranulats eine Kohlenstoffquelle und eine Siliziumquelle aufweist. Die Siliziumquelle und die Kohlenstoffquelle dienen dazu, in dem weiteren Verfahren durch eine Reaktion der Kohlenstoffquelle mit der Siliziumquelle Siliziumcarbid herstellen zu können. Daher sollten die Siliziumquelle und die Kohlenstoffquelle derart gewählt werden, dass diese bei den nachfolgend beschriebenen Bedingungen, insbesondere bei den folgenden Temperaturen, etwa bei Normaldruck (1bar) durch das vorbeschriebene Verfahren Siliziumcarbid ausbilden können.

Die Wahl der Siliziumquelle beziehungsweise der Kohlenstoffquelle ist somit nicht grundsätzlich beschränkt. Bevorzugte Siliziumquellen können beispielsweise Tetraethylorthosilikat (TEOS) umfassen, wohingegen bevorzugte Kohlenstoffquellen Zucker, wie etwa Saccharose, umfassen können. Beispielsweise kann ein Gemisch aus Flüssigzucker und Tetraethylorthosilikat, gelöst in Ethanol, als Gemisch von Kohlenstoffquelle und Siliziumquelle vorliegen, wobei die Erfindung in verständlicher Weise nicht auf die vorgenannten Beispiele beschränkt ist.

Mit Bezug auf den Dotierstoff kann dieser ausgewählt werden auf Basis der gewünschten Dotierung. Der oder die Dotierstoffe können hierbei in grundsätzlich frei wählbarer Form, etwa in einem Herstellungsprozess des Feststoffgranulats als lösliche Verbindung beigegeben werden oder etwa elementar, beispielsweise metallisch, addiert werden. Somit kann der Dotierstoff ebenfalls Bestandteil sein des Feststoffgranulats. Alternativ ist es aber auch denkbar, dass die Dotierung des sich bildenden Siliziumcarbids, etwa als sich bildende Fasern oder als 3C-Siliziumcarbid-Nanokristalle, wie dies nachstehend im Detail beschrieben ist, während der thermischen Behandlung über die Gasphase vorgenommen wird. Als Dotierungsmaterialien können für eine n-Dotierung bevorzugt Phosphor (P) oder Stickstoff (N) verwendet werden, was für eine Elektrode von größtem Vorteil ist, oder können für eine p-Dotierung Bor (B) oder Aluminium (Al) verwendet werden. Durch die Dotierung kann dabei eine ausreichende elektrische Leitfähigkeit des Elektrodenmaterials eingestellt werden.

Gemäß Verfahrensschritt b) umfasst das Verfahren weiterhin das Behandeln des bei Verfahrensschritt a) bereitgestellten Gemisches mit einer Temperatur in einem Bereich von ≥ 1400°C bis ≤ 2000°C, insbesondere ≥ 1600°C, beispielsweise in einem Bereich von ≥ 1650°C bis ≤ 1850°C, insbesondere in einem Reaktor. In diesem Verfahrensschritt wird es ermöglicht, dass sich Siliziumcarbid aus der Kohlenstoffquelle beziehungsweise aus der Siliziumquelle des Feststoffgranulats bildet.

In Abhängigkeit der exakten gewählten Temperatur kann dabei die konkrete Form des erzeugten Siliziumcarbids gesteuert werden. Im Detail können bei einer Einstellung der Temperatur in Verfahrensschritt b) auf einen Bereich von ca. ≥ 1650°C bis ca.≤ 1700°C bei Normaldruck (1bar) in besonders vorteilhafter Weise nanostrukturierte Fasern des Siliziumcarbids geformt werden. Dabei kann das Ausbilden eines Temperaturgradienten von Vorteil sein, so dass das Material des Feststoffgranulats in die Gasphase übergehen kann an einer Position, die eine vergleichsweise höhere Temperatur aufweist und sich Siliziumcarbid-Fasern an der vergleichsweise geringeren Temperatur abscheiden können, wie etwa an einer Abscheideoberfläche.

Somit kann insbesondere, um faserartiges Siliziumcarbid herzustellen, eine Abscheideoberfläche vorgesehen sein, welche verglichen zu der vorgenannten Temperatur eine verringerte Temperatur aufweist. In anderen Worten kann es vorgesehen sein, dass Verfahrensschritt b) in einem Reaktor abläuft, der eine Abscheideoberfläche aufweist, dessen Temperatur relativ zu wenigstens einer weiteren inneren Reaktoroberfläche reduziert ist. Beispielsweise kann die Temperatur der Abscheideoberfläche um eine Temperatur verringert sein, die in einem Bereich von ≥ 50°C bis ≤ 100°C liegt, verglichen zu der grundsätzlich in dem Reaktor eingestellten Temperatur in dem vorgenannten Bereich von ≥ 1400°C bis ≤ 2000°C, insbesondere ≥ 1600°C, beispielsweise in einem Bereich von ≥ 1650°C bis ≤ 1850°C. Insbesondere faserförmiges Elektrodenmaterial weist den Vorteil einer hohen mechanischen Flexibilität auf, so dass beim Einlagern beziehungsweise abgeben von Lithiumspezies, beispielsweise, während eines Lade- oder Entladevorgangs einer Batterie, keine Beschädigung oder übermäßige Alterung zu erwarten ist. Dadurch lassen sich derartige Elektroden mit einem sehr geringen Alterungsgrad beziehungsweise mit einer hohen Zyklenbeständigkeit betreiben.

Insbesondere durch die vorbeschriebene Ausgestaltung aufweisend die Abscheideoberfläche kann auf besonders einfache Weise und ohne das Benötigen eines hohen apparativen Aufbaus es ermöglicht werden, dass sich Siliziumcarbid aus der Gasphase in der gewünschten Weise insbesondere als Fasern durch das Vorsehen eines Temperaturgradienten abscheidet. Denn durch den Kontakt mit der Abscheideoberfläche kann sich aus der Gasphase unmittelbar Siliziumcarbid abscheiden, ohne das es weiterer Mittel bedarf. Beispielsweise kann der Reaktor durch ein beispielsweise nach oben offenes Gefäß, wie etwa durch einen nach oben offenen Zylinder, ausgestaltet sein, in welchem die Präkursoren auf die vorbeschriebene Temperatur erhitzt werden. Oberhalb der beispielsweise nach oben gerichteten Öffnung kann die beispielsweise kreisförmige und etwa rotierbare Abscheideoberfläche in Richtung des Innenraums des Gefäßes ausgerichtet sein, so dass die Gasphase mit der Abscheideoberfläche in Kontakt kommen kann, wodurch sich hier das Siliziumcarbid, beispielsweise in Form von nanoskaligen Fasern, abscheiden kann.

Insoweit in dem Reaktor eine Temperatur eingestellt wird, die in einem Bereich von ca. > 1700°C bis ca. ≤ 1850°C bei Normaldruck liegt, können feine nanostrukturierte Siliziumcarbid Partikel entstehen. In dieser Ausgestaltung kann auf einen Temperaturgradienten verzichtet werden, da sich das Siliziumcarbid in Form nanostrukturierter Partikel unmittelbar an der Position des Feststoffgranulats ausbildet beziehungsweise dort auskristallisiert. Ein auf Basis dieser Ausgestaltung hergestelltes Elektrodenmaterial weist eine ebenfalls hohe Zyklenbeständigkeit auf, so dass auch ein derartiges Elektrodenmaterial Vorteile gegenüber dem Stand der Technik aufweisen kann.

Zur Herstellung der Siliziumcarbid-Nanopartikel kann es dabei bevorzugt sein, dass das Feststoffgranulat eine sehr feine Körnung aufweist. Insbesondere können Partikelgrößen von Vorteil sein, die in einem Bereich von ≤ 10µm, beispielsweise in einem Bereich von ≥ 1µm vorliegen, wobei der Größenbereich insbesondere auf optischem Wege, beispielsweise durch Laserdiffraktometrie, ermittelbar sind, wobei dies grundsätzlich für die entsprechenden Grö-ßenbereiche gilt. Ferner können sich die vorbeschriebene Größenangaben wie auch weitere genannte Größenangaben jeweils auf die D50-Werte, beispielsweise auf die D90-Werte, beziehen, ohne dass jedes Mal gesondert darauf hingewiesen wird. Ferner kann das Ausgangsmaterial für die Herstellung von nanokristallinem 3C-SiC-Pulver deshalb etwa die Größe des Endproduktes aufweisen, da lediglich ein etwa 30%igen Volumenverlust auftritt.

Mit Bezug auf Fasern können dies insbesondere Gebilde sein, bei denen das Verhältnis von Länge zu Durchmesser mindestens größer oder gleich 3:1 ist, wohingegen in Abgrenzung zu Fasern bei Partikeln das Verhältnis von Länge zu Durchmesser kleiner als 3:1 ist. Beispielsweise kann in der vorliegenden Anmeldung bei den Fasern das Verhältnis von Länge zu Durchmesser auch bei größer oder gleich 10:1, insbesondere größer oder gleich 100:1, beispielsweise größer oder gleich 1000:1 liegen.

Beispielsweise bei der Herstellung von Siliziumcarbid-Partikeln ist es von Vorteil, dass das Ausgangsmaterial ein dichtes Gemisch aus Kohlenstoff und Silizium umfasst, wobei es sich nicht um einzelne Silizium- und Kohlenstoffkörner handelt, sondern die Kohlenstoffquelle und die Siliziumquelle in jedem Partikel vorhanden ist. Dadurch wird auf besonders vorteilhafte Weise ermöglicht, dass die Reaktion in einem sehr begrenzten Bereich, im Si-C-Korn, stattfinden kann.

Mit Bezug auf die Faserbildung kann es von Vorteil sein, dass durch das innige Gemisch von Silizium und Kohlenstoff in dem Feststoffgranulat bereits in der Gasphase unter Umständen Si₂C und SiC₂ vorliegen kann, was zu einer leichteren Bildung von SiC an einem anderen Ort im Temperaturgradienten führt. Es kann also direkt ein Si-C-Gas vorliegen, wobei in für den Fachmann verständlicher Weise auch andere Gaskomponenten vorliegen können.

Dabei kann es ferner durch die Einstellung der Temperatur ermöglicht werden, dass das erzeugte Siliziumcarbid sowohl in Form von Partikeln als auch in der Form als Fasern nanokristallin ist und im Detail eine kubische 3C-Struktur des Siliziumcarbids ermöglicht wird. Insbesondere, wenn das Siliziumkarbid (SiC) als Siliziumkarbid-Einkristall, vorzugsweise als monokristallines kubisches 3C-SIC vorliegt, vereinen die einkristallinen Siliziumkarbid-Fasern oder -Partikel eine hohe thermische Leitfähigkeit, was vorteilhaft sein kann für das Thermo-Management der Batterie, sowie chemische und thermische Haltbarkeit, was für eine Langzeitstabilität von Vorteil ist, mit der Flexibilität des Siliziumcarbids, insbesondere als Fasern, wie sie für eine hohe Zyklenstabilität von Vorteil ist. Denkbar im Rahmen der vorliegenden Erfindung sind jedoch auch polykristalline Formen des Siliziumkarbids.

Vorteilhaft ist ferner, dass Siliziumcarbid als Elektrodenmaterial eine hohe Kapazität aufweisen kann, so dass ein wie beschrieben hergestelltes Elektrodenmaterial ferner eine gute Leistungsfähigkeit einer Batterie ermöglichen kann.

Weiterhin kann, insoweit der Dotierstoff nicht in dem Feststoffgranulat aufweisend die Kohlenstoffquelle und die Siliziumquelle vorhanden ist und das Feststoffgranulat gemäß Verfahrensschritt a) in den Reaktor überführt wird, in welchem die Temperaturbehandlung gemäß Verfahrensschritt b) stattfindet, der Dotierstoff etwa als Gas in den Reaktor gegeben werden, wobei sich die Mischung gemäß Verfahrensschritt a) unmittelbar in dem Reaktor vor der Temperaturbehandlung ausbilden kann. Dies kann insbesondere dann von Vorteil sein, wenn der Dotierstoff als Gas vorliegen kann. Beispielsweise kann in diesem Fall gasförmiger Stickstoff als Dotierstoff dienen.

Nanostrukturierte Siliziumkarbid Nanokristall-Partikel und -fasern sind als Anodenmaterial für Lithium-Ionen-Batterien beziehungsweise Lithium-Ionen-Akkumulatoren (LIA) mit großem Potenzial zur vielfachen Leistungssteigerung geeignet. Die Materialien können die gegenwärtig verwendeten Carbon-Werkstoffe (Graphit) als Anoden direkt ersetzen, ohne signifikante Änderung der entsprechenden Produktionsanlagen zu benötigen. Somit können derzeit übliche Produktionsabläufe im Wesentlichen beibehalten werden, was eine besonders vorteilhafte Implementierung des vorbeschriebenen Verfahrens in diese bestehenden Prozesse beziehungsweise Anlagen ermöglichen kann. Die verwendbaren Materialien können für diese spezielle Anwendung optimiert und Produktionsverfahren in geeigneter Weise ohne große Mühen angepasst werden.

Grundsätzlich bietet das vorbeschriebene Verfahren den Vorteil, dass Elektroden, wie insbesondere Anoden, aufweisend Siliziumcarbid etwa fünf bis sechs Mal höhere Kapazitäten aufweisen können und deutlich zyklenfester beziehungsweise zyklenbeständiger sein können, als Lithium-Ionen-Akkumulatoren mit herkömmlichen Elektroden.

Die besonders hohe Wärmeleitfähigkeit von Siliziumcarbid kann ferner helfen, die Energieverluste in Form von Wärme beim Auf- und Entladen abzuleiten. Somit bieten durch ein vorbeschriebenes Verfahren erzeugte Elektroden ferner den Vorteil eines effektiven Thermomanagements, was die Langzeitstabilität der Elektroden weiter steigern kann.

Ein wichtiger Punkt bei dem vorbeschriebenen Verfahren ist dabei die Nano-Skaligkeit des erzeugten Siliziumcarbid-Materials. Dies lässt sich leicht durch die Verwendung von Nanofasern erreichen, oder auch durch Nano-Partikel beziehungsweise granulares Siliziumcarbid, wie diese vorstehend im Detail beschrieben sind. Dabei kann unter einem nanostrukturierten Siliziumcarbid insbesondere verstanden werden ein Siliziumcarbid, welches in wenigstens einer Dimension eine maximale räumliche Ausdehnung im Nanometerbereich, insbesondere von kleiner oder gleich 100nm, aufweist, wobei die untere Grenze durch das Herstellungsverfahren begrenzt sein kann. Insbesondere kann die Größe der Partikel des Feststoffgranulats gemäß Verfahrensschritt a) die untere Grenze der Partikel des Siliziumcarbids definieren, da hier meist eine Größe von 70% der Ausgangsgröße beziehungsweise der Größe der Partikel des Feststoffgranulats vorliegen kann, wobei die Untergrenze bei den Fasern bestimmt werden kann durch die Temperatur am Wachstumsort, den eingestellten Temperaturgradienten und die Zeit zum Wachsend er Fasern.

Vorteilhaft ist das vorbeschriebene Verfahren ferner, da das erzeugte Siliziumcarbid unmittelbar nach der Herstellung direkt für die oben beschriebene Anwendung als Elektrodenmaterial geeignet ist. Dadurch, dass das Siliziumcarbid daher unmittelbar vor der Elektrodenherstellung hergestellt werden kann und ferner problemlos verfügbar ist, kann ein Ausbilden einer Siliziumoxidschicht (SiO₂) auf der Oberfläche des Siliziumcarbids verhindert werden. Deren gezielte Entfernung ist für die effektive Funktion von Lithium-Ionen-Akkumulatoren gemäß dem Stand der Technik von Wichtigkeit, was im Stand der Technik etwa durch Chlorierung oder Anwendung von Flusssäure mit anschließender Kohlenstoffbelegung erfolgt. Auf einen derartigen zusätzlichen Schritt kann gemäß der vorliegenden Erfindung gegebenenfalls gerade verzichtet werden, was das Verfahren besonders kostengünstig machen kann.

Gegenüber dem erfindungsgemäß hergestellten Elektrodenmaterial besitzt kommerzielles SiC-Pulver meist keine ausreichende Reinheit und ist nur ungewollt dotiert. Meist enthält es auch eine Mischung verschiedener SiC-Polytypen. Für Li-Ionen-Akkumulatoren ist jedoch das gemäß dem vorbeschriebenen Verfahren insbesondere erzeugbare n-dotierte reine 3C-SiC von besonderem Vorteil.

Zusammenfassend wird es durch das vorbeschriebene Verfahren somit ermöglicht, eine einfache und kostengünstige Herstellbarkeit mit einer hohen Zyklenbeständigkeit zu vereinen.

In einer bevorzugten Ausgestaltung des vorbeschriebenen Verfahrens kann es vorgesehen sein, dass das in Verfahrensschritt a) bereitgestellte Feststoffgranulat bereitgestellt wird unter Verwendung eines Sol-Gel-Prozesses. Unter einem Sol-Gel-Prozess ist dabei in an sich bekannter Weise ein derartiger Prozess zu verstehen, bei dem Ausgangsstoffe der zu erzeugenden Verbindung, die sogenannten Präkursoren, in einem Lösungsmittel vorliegen, wobei dieses Gemisch als Sol bezeichnet wird. Im Verlaufe des Verfahrens bildet sich durch Trocknung beziehungsweise Alterung ein sogenanntes Gel aus, woraus durch weitere Behandlung, insbesondere Temperaturbehandlung, ein Feststoff entstehen kann. Dieser Feststoff kann somit durch die Auswahl der Präkursoren definiert werden und enthält die Kohlenstoffquelle und die Siliziumquelle für die Siliziumcarbidbildung und kann ferner gegebenenfalls einen Dotierstoff zum Dotieren des Siliziumcarbids enthalten, welcher bereits bei der Zubereitung des Sols zugegeben werden kann.

Auch der Sol-Gel-Prozess kann dabei vollständig oder zumindest teilweise in einer Schutzatmosphäre, wie insbesondere in einer Argonatmosphäre, ablaufen.

Insbesondere mit Bezug auf eine Ausgestaltung des vorbeschriebenen Verfahrens durch einen Sol-Gel-Prozesses kann es vorgesehen sein, dass der Sol-Gel-Prozess zumindest die folgenden Verfahrensschritte aufweist:
c) Bereitstellen eines Präkursorgemisches mit einer Siliziumquelle, einer Kohlenstoffquelle und gegebenenfalls einem Dotierstoff, wobei das Präkursorgemisch in einem Lösungsmittel vorliegt;
d) Behandeln des Präkursorgemisches bei insbesondere zu der Raumtemperatur (22°C) erhöhter Temperatur unter Trocknung des Präkursorgemisches; und
e) gegebenenfalls Erhitzen des getrockneten Präkursorgemisches auf eine Temperatur in einem Bereich von ≥ 800°C bis ≤ 1200°C, insbesondere in einem Bereich von ≥ 900°C bis ≤ 1100°C.

Gemäß Verfahrensschritt c) können somit zunächst die Präkursoren bereitgestellt werden, welche zu einem Feststoff verarbeitet werden und anschließend als Kohlenstoffquelle beziehungsweise als Siliziumquelle dienen können. Ferner kann in diesem Verfahrensschritt bereits ein Dotierstoff zugegeben werden. Als nicht beschränkendes Beispiel kann in Verfahrensschritt c) ein Gemisch aus Flüssigzucker und Tetraethylorthosilikat in Ethanol zu einem Sol vermischt werden.

Dieses kann gemäß Verfahrensschritt d) beispielsweise in einem Temperaturbereich nahe dem Siedepunkt des Lösungsmittels, bei der Verwendung von Ethanol etwa in einem Bereich von 60-70°C, unter Luftabschluss zum gelieren gebracht beziehungsweise gealtert werden, wobei es ferner bei einer Temperatur oberhalb des Siedepunkts getrocknet werden kann. Dabei kann es von Vorteil sein, wenn beim Trocknen des Feststoffes Partikel entstehen, die in einem Bereich von etwa ≥1 µm bis ≤ 2mm liegen, wobei, wie dies vorstehend bereits angedeutet ist, Partikel in einem Größenbereich von ≥ 1 µm bis ≤ 10µm für nanokristallines Siliziumcarbid-Pulver von Vorteil sind und wobei Partikel in einem Größenbereich von > 10 µm bis ≤ 2mm für nanokristalline Siliziumcarbid-Fasern von Vorteil sind. Die vorbenannten Größenbereiche haben dabei insbesondere prozesstechnische Vorteile, wie etwa ein Verhindern des Aufsteigens der feinen Partikel bei einer Faserherstellung. Eine derartige Partikelgröße kann beispielsweise ermöglicht werden durch einen Rührvorgang während des Trocknens, wobei die Partikelgröße etwa einstellbar sein kann durch das verwendete Rührwerk, eine Umdrehungsgeschwindigkeit und die Dauer beziehungsweise Stärke des Rührens, wie dies dem Fachmann grundsätzlich bekannt ist.

Gemäß Verfahrensschritt e) erfolgt anschließend gegebenenfalls ein Erhitzen des getrockneten Präkursorgemisches auf eine Temperatur in einem Bereich von ≥ 800°C bis ≤ 1200°C, insbesondere in einem Bereich von ≥ 900°C bis ≤ 1100°C, beispielsweise bei 1000°C. Durch diesen Verfahrensschritt kann der erzeugte Feststoff insbesondere von Verunreinigungen befreit werden, was das erzeugte Siliziumcarbid besonders rein gestalten kann. Dadurch kann die Qualität einer erzeugten Elektrode besonders hoch sein. Darüber hinaus kann eine Kristallisierung des Siliziumcarbids aus der Gasphase so verbessert werden.

Durch Verfahrensschritt d) beziehungsweise gegebenenfalls e) wird dabei das Gemisch gemäß Verfahrensschritt a) bereitgestellt beziehungsweise fertiggestellt.

Zusammenfassend kann somit in einer Ausgestaltung ein Sol-Gel-Verfahren Anwendung finden, bei dem die zu verarbeitenden Materialien miteinander eine Mischung in Form eines Gels bilden und anschließend getrocknet werden, und in einem weiteren Schritt in einer carbothermalen Reduktion das Auskristallisieren des Siliziumcarbids, wie etwa das Wachsen der Fasern, abläuft. Der als Prozess an sich bekannte Sol-Gel-Prozess bietet eine gut beherrschbare und weit variierbare Möglichkeit der Herstellung unterschiedlichster Ausgangsmaterialien für die Herstellung des erfindungsgemäßen Elektrodenmaterials oder von deren Vormaterialien.

Von Vorteil ist es, wenn die Dotierungsmaterialien im nasschemischen Teil der Sol-Gel-Synthese eingebracht werden, wodurch die Dotierungsmaterialien während der thermischen Behandlung in die wachsenden Fasern oder die Partikel eingebaut werden. Die Dotierungsmaterialien können hierbei entweder als lösliche Verbindung beigegeben werden oder metallisch addiert werden. Alternativ ist es aber auch denkbar, dass die Dotierung der sich bildenden Fasern während der thermischen Behandlung über die Gasphase vorgenommen wird. Als Dotierungsmaterialien können wiederum bevorzugt Phosphor (P) oder Stickstoff (N) beziehungsweise Bor (B) oder Aluminium (Al) verwendet werden.

Eine weitere Möglichkeit der Beeinflussung der Eigenschaften einer insbesondere aus Fasern gebildeten Elektrodenschicht ergibt sich, wenn die gebildeten Fasern bei einer Nachbehandlung in einem erneuten Sol-Gel-Verfahren miteinander vernetzt werden. Hierdurch wird aus den Einzelfasern durch die Vernetzung im Bereich der Berührungspunkte einzelner oder einer Vielzahl von Fasern ein fester und gleichwohl flexibler Verbund der Fasern gebildet, ohne dass mittels textiler Bearbeitungsschritte die Fasern miteinander verbunden werden müssen.

In einer weiteren bevorzugten Ausgestaltung des Verfahrens kann es vorgesehen sein, dass in dem gemäß Verfahrensschritt a) bereitgestellten Feststoffgranulat Kohlenstoff mit Bezug auf Silizium in einer größer als äquimolaren Menge vorliegt. In anderen Worten kann der Kohlenstoffgehalt derart gewählt werden, dass bei einer Reaktion sämtlichen Siliziums zu Siliziumcarbid noch weiterer Kohlenstoff vorhanden ist. Beispielsweise kann Kohlenstoff mit Bezug zu Silizium vorliegen in einer Menge von ≥ 1/1 bis ≤ 1.5/1, bezogen auf die molaren Anteile. Insbesondere in dieser Ausgestaltung kann das Verfahren besonders einfach ablaufen, da durch die so erfolgende Modifizierung der Oberfläche der Siliziumcarbidfasern beziehungsweise der Siliziumcarbidpartikel durch Ausbilden einer Kohlenstofflage beziehungsweise Kohlenstoffschicht an der Oberfläche ein Oxidieren des Siliziums beziehungsweise eine Ausbildung von Siliziumoxid besonders effektiv auch bei einer Lagerung an Luft über einen längeren Zeitraum wirksam verhindert werden kann. Somit kann insbesondere in dieser Ausgestaltung wirksam verhindert werden, dass zusätzliche Schritte zum Entfernen einer Siliziumoxidschicht notwendig werden, um ein effektives Einlagern von Lithiumverbindungen bei einem Betrieb als Elektrode in einer Lithium-Ionen-Batterie beziehungsweise in einem Lithium-Ionen-Akkumulator zu ermöglichen. Es kann somit durch eine vergleichsweise einfache und unkomplizierte Änderung der Stöchiometrie während des Sol-Gel-Prozesses eine Schutzschicht mit den gewünschten antioxidativen Eigenschaften generiert werden. Dabei ist kein zusätzlicher Schritt notwendig, was das Verfahren besonders kosten- und zeitsparend durchführbar gestaltet.

Schritt Je nach der gewünschten Form des zu erzeugenden Siliziumcarbids kann es vorteilhaft sein, dass, beispielsweise bei einem Trockenvorgang während des Sol-Gel-Prozesses, etwa durch ein Rühren, eine geeignete Partikelgröße des Feststoffs eingestellt wird, wie dies vorstehend mit Bezug auf Verfahrensschritt d) beschrieben ist. Beispielsweise kann es bevorzugt sein, wenn eine Partikelgröße entsteht, welche in einem Bereich von > 10µm bis ≤ 2mm beispielsweise in einem Bereich von ≥ 25µm bis ≤ 70µm liegt, um Siliziumcarbid-Fasern zu erzeugen. Für das Erzeugen von Siliziumcarbid-Partikeln kann es ferner von Vorteil sein, wenn Feststoffpartikel erzeugt werden, die in einem Bereich von < 10µm, etwa von ≤ 5µm liegen, beispielsweise ≥ 1µm.

In einer weiteren bevorzugten Ausgestaltung des Verfahrens kann es vorgesehen sein, dass die Abscheideoberfläche eine Temperatur aufweist, die relativ zu wenigstens einer weiteren inneren Reaktoroberfläche eine Temperatur aufweist, die um einen Betrag in einem Bereich von ≥ 30°C bis ≤ 200°C, vorzugsweise in einem Bereich von ≥ 50°C bis ≤ 100°C, verringert ist. In dieser Ausgestaltung kann das Abscheiden insbesondere von Siliziumcarbildfasern besonders effektiv ablaufen, wobei eine derartige Temperaturdifferenz ferner prozesstechnisch einfach einstellbar ist.

Hinsichtlich weiterer Vorteile und technischer Merkmale des vorbeschriebenen Verfahrens wird hiermit explizit auf die Beschreibung der Verwendung, der Batterieelektrode sowie der Batterie sowie auf das Beispiel Bezug genommen, und umgekehrt.

Gegenstand der vorliegenden Erfindung ist ferner eine Verwendung eines Verfahrens zum Herstellen eines Elektrodenmaterials für eine Batterie, insbesondere für eine Lithium-Ionen-Batterie, wobei das Elektrodenmaterial nanostrukturiertes Siliziumcarbid umfasst, wie dieses Verfahren vorstehend im Detail beschrieben ist, zum Herstellen einer Batterieelektrode, insbesondere zum Herstellen einer Anode für eine Lithium-Ionen-Batterie.

Hierzu kann das hergestellte Elektrodenmaterial beziehungsweise das nanostrukturierte Siliziumcarbid mit einem etwa polymeren Binder und gegebenenfalls einem Leitzusatz wie etwa Graphit, zu einer Masse vereinigt werden und ferner mit einem Elektrodenableiter verbunden werden, etwa auf diesen aufgetragen werden. Diese Schritte sind dem Fachmann grundsätzlich hinreichend bekannt und werden an dieser Stelle nicht weiter detailliert beschrieben.

Zusammenfassend wird es durch eine Verwendung des vorbeschriebenen Verfahrens zum Herstellen einer Elektrode für eine Batterie somit ermöglicht, eine einfache und kostengünstige Herstellbarkeit mit einer hohen Zyklenbeständigkeit zu vereinen.

Hinsichtlich weiterer Vorteile und technischer Merkmale der vorbeschriebenen Verwendung wird hiermit explizit auf die Beschreibung des Verfahrens, der Batterieelektrode, der Batterie sowie auf das Beispiel Bezug genommen, und umgekehrt.

Gegenstand der vorliegenden Erfindung ist ferner eine Batterieelektrode, aufweisend ein Elektrodenmaterial, das nanostrukturiertes Siliziumcarbid aufweist und hergestellt ist nach einem Verfahren, wie dieses vorstehend im Detail beschrieben ist.

Eine derartige Elektrode, wie insbesondere Anode einer Lithium-Ionen-Batterie, weist somit Siliziumcarbid auf, das wie vorstehend beschrieben ausgestaltet beziehungsweise hergestellt ist. Es kann vorgesehen sein, dass das Siliziumcarbid an seiner Oberfläche eine Kohlenstoffschicht aufweist. Dadurch kann ein Oxidieren des Materials unter Ausbildung von Silziumdioxid verhindert werden, was die Langzeitstabilität erhöhen kann.

Ferner kann das Siliziumcarbid dotiert sein, wobei die Menge der Dotierung abhängig sein kann von der gewünschten Leitfähigkeit des Siliziumcarbids beziehungsweise der Elektrode. Geeignete Dotierstoffe umfassen beispielsweise Stickstoff, Phosphor Bor und Aluminium.

Beispielsweise kann das Siliziumcarbid nanokristallin sein und etwa aus nanostrukturierten kristallinen Fasern oder Partikeln oder einer Mischung aus Fasern und Partikeln ausgestaltet sein. Das Siliziumcarbid kann beispielsweise in einem Binder vorliegen, wobei in dem Binder ferner ein Leitzusatz, wie etwa Graphit, vorliegen kann.

Zusammenfassend wird es durch die vorbeschriebene Batterieelektrode ermöglicht, eine einfache und kostengünstige Herstellbarkeit mit einer hohen Zyklenbeständigkeit zu vereinen.

Hinsichtlich weiterer Vorteile und technischer Merkmale der vorbeschriebenen Batterieelektrode wird hiermit explizit auf die Beschreibung des Verfahrens, der Verwendung, der Batterie sowie auf das Beispiel Bezug genommen, und umgekehrt.

Gegenstand der vorliegenden Erfindung ist ferner eine Batterie, wobei die Batterie wenigstens eine Batterieelektrode aufweist, wie diese vorstehend im Detail beschrieben ist.

Die vorbeschriebene Batterie kann dabei eine Lithium-Ionen-Batterie sein. Ferner kann es vorgesehen sein, dass die Anode der Batterie wie vorstehend beschrieben ausgestaltet ist.

Zusammenfassend wird es durch die vorbeschriebene Batterie ermöglicht, eine einfache und kostengünstige Herstellbarkeit mit einer hohen Zyklenbeständigkeit zu vereinen.

Hinsichtlich weiterer Vorteile und technischer Merkmale der vorbeschriebenen Batterie wird hiermit explizit auf die Beschreibung des Verfahrens, der Verwendung, der Batterieelektrode sowie auf das Beispiel Bezug genommen, und umgekehrt.

Nachfolgend wird die Erfindung anhand eines bevorzugten Ausführungsbeispiels exemplarisch erläutert, wobei die nachfolgend dargestellten Merkmale sowohl jeweils einzeln als auch in Kombination einen Aspekt der Erfindung darstellen können, und wobei die Erfindung nicht auf das nachfolgende Beispiel beschränkt ist.

### Beispiel

Das nachstehend beschriebene Beispiel bezieht sich auf das Herstellen von Siliziumkarbid für Anoden für Lithium-Ionen-Akkumulatoren unter Verwendung eines Sol-Gel-Prozesses.

Für Anoden von Lithiumionen-Akkumulatoren kann 3C-SiC (6H)-SiC vorzugsweise in zwei Formen eingesetzt werden, nämlich als ein einkristallines, dotiertes SiC-Nanopulver, insbesondere hergestellt mit einer Oberflächenmodifikation, oder als einkristalline, dotierte SiC-Nanofasern, ebenfalls insbesondere hergestellt mit einer Oberflächenmodifikation wie nachstehend beschrieben.

Im Folgenden wird zunächst der Herstellungsprozess für nanokristallines SiC-Pulver und für nanokristalline SiC-Fasern unter Verwendung eines Sol-Gel-Prozesses beschrieben.

Herstellung des Sol-Gel-Si-C-Präkursors: Im Folgenden wird die chemische Zusammensetzung, Sol-Gel-Aufbereitung mit verschiedenen Trocknungsschritten bei 70°C bis 200°C, sowie abschließende Gewinnung des Si-C-Feststoffgranulates bei 1000°C beschrieben.

Flüssigzucker, Tetraethylorthosilikat und Ethanol werden zu einem Sol vermischt und bei 60 - 70°C unter Luftabschluss zum Gelieren gebracht. Die Zusammensetzung für einen Ansatz betrug (a) eine kolloidale Suspension aus 135g Tetraethylorthosilikat (TEOS) in 168,7g Ethanol gelöst als Siliziumquelle und (b) eine Lösung aus 68g Sacharose als Kohlenstoffquelle, in 75g destilliertem Wasser, der 37,15g Salzsäure (HCl) als Katalysator zum Ausbilden von Invertzucker hinzugefügt wird. Anschließend wurde Lösung (a) mit dem Flüssigzucker (b) unter Rühren miteinander vermischt. Alternativ kann anstatt der Lösung (b) auch direkt Flüssigzucker (Invertzucker, 122g 70%ig) verwendet werden. Dann wird kein Wasser zugesetzt und nur sehr wenig Salzsäure (5.2g), da diese nur noch zum Start des Gelierprozesses benötigt wird. Dieses Sol wird bei 50°C gealtert und anschließend bei 150 - 200°C getrocknet.

Für die Herstellung von SiC-Fasern wird vorzugsweise gröberes Granulat benötigt (einige 10 µm), so dass bei dem Altern und/oder bei dem Trocknen zeitweises Rühren erfolgt. Für nanokristallines SiC-Pulver findet ständiges Rühren bei 200°C statt. Hierdurch zerfällt das Präkursor-Granulat zu einem sehr feinen Pulver, welches bevorzugt für die Herstellung von nanokristallinem SiC-Pulver ist. Dieses Granulat beziehungsweise Pulver wird von verbliebenen ungewünschten Reaktionsprodukten bei 1000°C im Stickstoff- oder Argon-Gasstrom befreit und abschließend ggf. gemahlen.

Nun kann eine Modifikation des SiC-Präkursors zum Zweck der Dotierung von SiC-Nanofasern und SiC-Nanopulvern erfolgen. Eine n-Dotierung kann etwa mit Stickstoff (beispielhafte Additive: Salpetersäure, Ammoniumchlorid, Kaliumnitrat oder Melamin), oder mit Phosphor (beispielhafte Additive: Kaliumdihydrogenphosphat oder Di-Natrium- hydrogenphosphat) erfolgen. Eine p-Dotierung kann beispielhaft mit Bor (beispielhafte Additive: Di-Natriumtetraborat) oder mit Aluminium (Add.: Aluminiumpulver) erfolgen. Die Dotierstoffe werden dem Sol beigegeben, die Mengen sind abhängig von dem konkreten Additiv und der gewünschten Dotierkonzentration.

Betreffend die Siliziumcarbid-Faser-Herstellung wird der entstandene Feststoff in einem Hochtemperaturreaktor geheizt, wobei das Granulat ab 1400°C, insbesondere ab 1600°C, in die Gasphase übergeht und sich einkristalline Siliziumkarbid-Fasern in einem Temperaturgradienten auf einem rotierenden Substrat abscheiden. Speziell nanokristalline Fasern für Li-Ionen-Akkumulatoren-Anwendungen wachsen ab 1650°C bis 1700°C in der Gasphase beziehungsweise auf einer um ca. 50-100°C kühleren Abscheideoberfläche.

Betreffend die SiC-Nanopulver-Herstellung wird ebenfalls in einem Hochtemperaturreaktor gearbeitet, jedoch ohne Temperaturgradienten, wobei das Präkursorpulver zu einkristallinem 3C-SiC kristallisiert.

Betreffend eine Oberflächenmodifikation sollten vorzugsweise, um eine effektive Eindiffusion von Lithiumionen in 3C-SiC zu ermöglichen, die folgenden beiden Voraussetzungen erfüllt sein: Hohe Volumen-Dotierung und Oberflächenleitfähigkeit. Die Volumendotierung wird wie oben beschrieben während der SiC-Herstellung vorgenommen. Die Herstellung der höchstreinen Nanopartikel (Kristalle und auch Fasern) kann in inerter Atmosphäre erfolgen. Alle darauffolgenden Produktionsschritte, wie etwa Beschichtung der Stromableiter, etwa Metallfolien, für Lithium-Ionen-Akkumulatoren können dann innerhalb weniger Stunden oder komplett unter Sauerstoffausschluss erfolgen, um eine Oxidation der Oberfläche zu verhindern. Praktikabler und elektrisch sinnvoller ist die Herstellung der SiC-Nanopartikel unter Verwendung einer Oberflächenmodifikation direkt mit einer elektrisch leitfähigen Schutzschicht, insbesondere eine kohlenstoffhaltige Schutzschicht. Erreicht wird dies hier durch eine Änderung des Verhältnisses von Kohlenstoff und Silizium im Präkursorgranulat um einige Prozent zugunsten des Kohlenstoffs. Dies vereinfacht den Herstellungsprozess enorm.

## Patentansprüche

1. Verwendung eines Verfahrens zum Herstellen eines Elektrodenmaterials für eine Batterieelektrode, insbesondere für eine Lithium-Ionen-Batterie, wobei das Elektrodenmaterial nanostrukturiertes Siliziumcarbid umfasst, wobei das Verfahren die Verfahrensschritte aufweist:
a) Bereitstellen eines Gemisches mit einer Siliziumquelle, einer Kohlenstoffquelle und einem Dotierstoff, wobei wenigstens die Siliziumquelle und die Kohlenstoffquelle gemeinsam in Partikeln eines Feststoffgranulats vorliegen;
b) Behandeln des in Verfahrensschritt a) bereitgestellten Gemisches mit einer Temperatur in einem Bereich von ≥ 1400°C bis ≤ 2000°C, insbesondere in einem Bereich von ≥ 1650°C bis ≤ 1850°C, wobei
Verfahrensschritt b) in einem Reaktor abläuft, der eine Abscheideoberfläche aufweist, dessen Temperatur relativ zu wenigstens einer weiteren inneren Reaktoroberfläche reduziert ist.

2. Verwendung nach Anspruch 1, **dadurch gekennzeichnet, dass** das in Verfahrensschritt a) bereitgestellte Feststoffgranulat bereitgestellt wird unter Verwendung eines Sol-Gel-Prozesses.

3. Verwendung nach Anspruch 2, **dadurch gekennzeichnet, dass** der Sol-Gel-Prozess zumindest die folgenden Verfahrensschritte aufweist:
c) Bereitstellen eines Präkursorgemisches mit einer Siliziumquelle, einer Kohlenstoffquelle und gegebenenfalls einem Dotierstoff, wobei das Präkursorgemisch in einem Lösungsmittel vorliegt;
d) Behandeln des Präkursorgemisches bei erhöhter Temperatur unter Trocknung des Präkursorgemisches; und
e) gegebenenfalls Erhitzen des getrockneten Präkursorgemisches auf eine Temperatur in einem Bereich von ≥ 800°C bis ≤ 1200°C, insbesondere in einem Bereich von ≥ 900°C bis ≤ 1100°C.

4. Verwendung nach einem der Ansprüche 1 bis 3, **dadurch gekennzeichnet, dass** in dem gemäß Verfahrensschritt a) bereitgestellten Feststoffgranulat Kohlenstoff mit Bezug auf Silizium in einer größer als äquimolaren Menge vorliegt.

5. Verwendung nach einem der Ansprüche 1 bis 4, **dadurch gekennzeichnet, dass** die Abscheideoberfläche eine Temperatur aufweist, die relativ zu wenigstens einer weiteren inneren Reaktoroberfläche eine Temperatur aufweist, die um einen Betrag in einem Bereich von ≥ 30°C bis ≤ 200°C, vorzugsweise in einem Bereich von ≥ 50°C bis ≤ 100°C, verringert ist.

6. Verwendung nach einem der Ansprüche 1 bis 5, **dadurch gekennzeichnet, dass** das Verfahren verwendet wird zum Herstellen einer Anode einer Lithium-Ionen-Batterie.

7. Batterieelektrode, aufweisend ein Elektrodenmaterial, das nanostrukturiertes Siliziumcarbid aufweist und hergestellt ist nach einer Verwendung gemäß einem der Ansprüche 1 bis 6.

8. Batterieelektrode nach Anspruch 7, **dadurch gekennzeichnet, dass** das Elektrodenmaterial Siliziumcarbid-Fasern aufweist.

9. Batterieelektrode nach Anspruch 7 oder 8, **dadurch gekennzeichnet, dass** das Elektrodenmaterial Siliziumcarbid-Partikel aufweist.

10. Batterieelektrode nach einem der Ansprüche 7 bis 9, **dadurch gekennzeichnet, dass** das Siliziumcarbid an seiner Oberfläche eine Kohlenstoffschicht aufweist.

11. Batterie, aufweisend wenigstens eine Batterieelektrode gemäß einem der Ansprüche 7 bis 10.

12. Batterie nach Anspruch 11, **dadurch gekennzeichnet, dass** die Batterie eine Lithium-Ionen-Batterie ist.

13. Batterie nach Anspruch 11 oder 12, **dadurch gekennzeichnet, dass** die Batterieelektrode als Anode ausgestaltet ist.

## Claims

1. Use of a method for producing an electrode material for a battery electrode, in particular for a lithium-ion battery, wherein said electrode material includes nanostructured silicon carbide, comprising the steps of:
a) providing a mixture including a silicon source, a carbon source and a dopant, wherein at least the silicon source and the carbon source are present in common in particles of a solid granulate;
b) treating the mixture provided in step a) at a temperature in the range from ≥ 1400°C to ≤ 2000°C, in particular in a range from ≥ 1650°C to ≤ 1850°C, wherein step b) is carried out in a reactor which comprises a deposition surface the temperature of which is reduced relative to at least one further inner reactor surface.

2. Use according to claim 1, **characterized in that** the solid granulate provided in step a) is prepared by use of a sol-gel process.

3. Use according to claim 2, **characterized in that** the sol-gel process at least comprises the following steps:
c) providing a precursor mixture including a silicon source, a carbon source and optionally a dopant, wherein the precursor mixture is present in a solvent;
d) treating the precursor mixture at an elevated temperature while drying the precursor mixture; and
e) optionally heating the dried precursor mixture to a temperature in a range of ≥ 800°C to ≤ 1200°C, in particular in a range of ≥ 900°C to ≤ 1100°C.

4. Use according to any one of claims 1 to 3, **characterized in that** in the solid granulate provided in step a) carbon is present with respect to silicon in an amount greater than an equimolar amount.

5. Use according to any one of claims 1 to 4, **characterized in that** the deposition surface has a temperature that with respect to at least one further inner reactor surface has a temperature which is reduced by an amount in a range of ≥ 30°C to ≤ 200°C, preferably in a range of ≥ 50°C to ≤ 100°C.

6. Use according to any one of claims 1 to 5, **characterized in that** the method is used for producing an anode of a lithium-ion battery.

7. Battery electrode comprising an electrode material which includes nanostructured silicon carbide and is produced by a use according to any one of claims 1 to 6.

8. Battery electrode according to claim 7, **characterized in that** the electrode material comprises silicon carbide fibers.

9. Battery electrode according to claim 7 or 8, **characterized in that** the electrode material includes silicon carbide particles.

10. Battery electrode according to any one of claims 7 to 9, **characterized in that** the silicon carbide comprises a carbon film on its surface.

11. Battery comprising at least one battery electrode according to any one of claims 7 to 10.

12. Battery according to claim 11, **characterized in that** the battery is a lithium-ion battery.

13. Battery according to claim 11 or 12, **characterized in that** the battery electrode is configured as an anode.

## Revendications

1. Utilisation d'un procédé de fabrication d'un matériau d'électrode pour une électrode de batterie, notamment pour une batterie à ions lithium, où le matériau d'électrode comprend un carbure de silicium nanostructuré, où le procédé présente les étapes de procédé :
a) la préparation d'un mélange avec une source de silicium, une source de carbone et un agent dopant, où au moins la source de silicium et la source de carbone se présentent ensemble sous forme de particules de granulat solide ;
b) le traitement du mélange préparé dans l'étape de procédé a) à une température dans une plage ≥ 1400 °C à ≤ 2000 °C, notamment dans une plage ≥ 1650 °C à ≤ 1850 °C, où
l'étape de procédé b) se déroule dans un réacteur qui présente une surface de séparation dont la température est réduite par rapport à au moins une autre surface de réacteur intérieure.

2. Utilisation selon la revendication 1, **caractérisée en ce que** dans l'étape de procédé a), la granulat solide préparé est préparé moyennant l'emploi d'un processus sol-gel.

3. Utilisation selon la revendication 2, **caractérisée en ce que** le processus sol-gel présente au moins les étapes de procédé suivantes :
c) la préparation d'un mélange de précurseur avec une source de silicium, une source de carbone et éventuellement un agent dopant, où le mélange de précurseur est présent dans un solvant ;
d) le traitement du mélange de précurseur à température élevée moyennant un séchage du mélange de précurseur ; et
e) éventuellement, le chauffage du mélange de précurseur séché à une température dans une plage ≥ 800 °C à ≤ 1200 °C, notamment dans une plage ≥ 900 °C à ≤ 1100 °C.

4. Utilisation selon l'une des revendications 1 à 3, **caractérisée en ce que** dans le granulat solide préparé selon l'étape de procédé a), du carbone est présent par rapport au silicium dans une quantité supérieure à une quantité équimolaire.

5. Utilisation selon l'une des revendications 1 à 4, **caractérisée en ce que** la surface de séparation présente une température qui présente une température par rapport à au moins une autre surface de réacteur intérieure qui est diminuée d'un équivalent dans une plage ≥ 30 °C à ≤ 200 °C, de préférence, dans une plage ≥ 50 °C à ≤ 100 °C.

6. Utilisation selon l'une des revendications 1 à 5, **caractérisée en ce que** le procédé est employé pour la fabrication d'une anode d'une batterie à ions lithium.

7. Electrode de batterie, présentant un matériau d'électrode, qui présente du carbure de silicium nanostructuré et est fabriqué d'après une utilisation selon l'une des revendications 1 à 6.

8. Electrode de batterie selon la revendication 7, **caractérisée en ce que** le matériau d'électrode présente des fibres de carbure de silicium.

9. Electrode de batterie selon la revendication 7 ou la revendication 8, **caractérisée en ce que** le matériau d'électrode présente des particules de carbure de silicium.

10. Electrode de batterie selon l'une des revendications 7 à 9, **caractérisée en ce que** le carbure de silicium présente une couche de carbone sur sa surface.

11. Batterie présentant au moins une électrode de batterie selon l'une des revendications 7 à 10.

12. Batterie selon la revendication 11, **caractérisée en ce que** la batterie est une batterie à ions lithium.

13. Batterie selon la revendication 11 ou la revendication 12, **caractérisée en ce que** l'électrode de batterie est conçue sous forme d'anode.
